# EUROPÄISCHE PATENTANMELDUNG

(11) **EP 0 978 420 A1**
(43) Veröffentlichungstag der Anmeldung: **09.02.2000**
(21) Anmeldenummer: 99112068.4
(22) Anmeldetag: 23.06.1999
(51) Int. Cl.: B60R 13/02, B60Q 3/02

(54) **Innenausbauteil für Kraftfahrzeuge**

(30) Priorität: 05.08.1998 DE 19835279
(71) Anmelder: Behr Automotive GmbH, 73240 Wendlingen (DE)
(72) Erfinder: Berg, Matthias, Dr., 72669 Unterensingen (DE); Hempel, Thomas, 71711 Steinheim (DE)
(74) Vertreter: Hoeger, Stellrecht & Partner

(57) **Zusammenfassung**

Um die Montage eines Innenausbauteils und eines Leuchtelements innerhalb eines Kraftfahrzeug-Innenraums zu vereinfachen, wird ein Innenausbauteil für Kraftfahrzeuge mit einem Auskleidungselement, zum Beispiel aus Holz, zur Auskleidung des Kraftfahrzeug-Innenraums vorgeschlagen, wobei in das Innenausbauteil zur Beleuchtung des Kraftfahrzeug-Innenraums ein elektrisches Leuchtelement integriert ist.

## Beschreibung

Die vorliegende Erfindung betrifft ein Innenausbauteil für Kraftfahrzeuge mit einem Auskleidungselement, z.B. aus Holz, zur Auskleidung eines Kraftfahrzeug-Innenraums.

Innenausbauteile mit einer meist beschichteten, beispielsweise einer lackierten Oberfläche werden verstärkt zur Innenausstattung von Kraftfahrzeugen verwendet. Hierbei kommen insbesondere Holzformteile zum Einsatz, die als massive Teile oder als Furnierteile ausgebildet sein können, wobei letztere auf ihrer Rückseite in der Regel mit einem Verstärkungselement zum Beispiel aus Kunststoff versehen sind. Derartige Innenausbauteile können üblicherweise mittels an ihrer Rückseite angeordneter Befestigungselemente im Innenraum des Kraftfahrzeugs befestigt werden.

Um einem Fahrer des Kraftfahrzeugs während einer Fahrt bei Dunkelheit zu einer gewissen Orientierung innerhalb des Kraftfahrzeug-Innenraums zu verhelfen, so daß er zumindest die Begrenzungen des Innenraums erkennen kann und sieht, wo er beispielsweise einen bestimmten Gegenstand im Innenraum abgelegt hat, sind üblicherweise an der Decke des Innenraums gehaltene, separate elektrische Leuchten vorgesehen. Bei der Montage des Kraftfahrzeugs ist es erforderlich, die zur Innenausstattung vorgesehenen Innenausbauteile beispielsweise an der Innenseite der Kraftfahrzeugtüren zu befestigen, und zusätzlich müssen die elektrischen Leuchten zum Beispiel an der Decke fixiert werden.

Aufgabe der vorliegenden Erfindung ist es, die Montage der Innenausbauteile und Leuchten zu vereinfachen. Diese Aufgabe wird bei einem Innenausbauteil der eingangs genannten Art erfindungsgemäß dadurch gelöst, daß in das Innenausbauteil zur Beleuchtung des KraftfahrzeugInnenraums ein elektrisches Leuchtelement integriert ist. Das Innenausbauteil weist somit sowohl ein Auskleidungselement als auch ein elektrisches Leuchtelement auf, so daß eine separate Montage des Leuchtelements entfallen kann. Das Leuchtelement wird vielmehr bei der Herstellung des Innenausbauteils in dieses integriert. Dieser Arbeitsvorgang kann bereits bei einem Zulieferer erfolgen, so daß die endgültige Montage des Kraftfahrzeugs schneller und kostengünstiger durchgeführt werden kann.

Bei einer bevorzugten Ausführungsform ist vorgesehen, daß die Bautiefe des Leuchtelements maximal ca. der Bautiefe des Auskleidungselements entspricht. Eine derartige Ausgestaltung des Leuchtelements ermöglicht eine besonders einfache Integration des Leuchtelements in das Innenausbauteil. Außerdem hat eine derartige Ausgestaltung eine optisch besonders ansprechende Wirkung zur Folge. Die geringe Bautiefe ermöglicht es auch, das Innenausbauteil mit einer glatten sichtseitigen, d.h. dem Innenraum des Kraftfahrzeugs zugewandten Oberfläche auszugestalten, ohne daß aus dieser Oberfläche das Leuchtelement merklich hervorsteht.

Um eine besonders gleichmäßige Beleuchtung des Kraftfahrzeug-Innenraums zu erzielen, ist es von Vorteil, wenn das Leuchtelement flächenhaft ausgedehnt ist. Bei einer punktförmigen Leuchtquelle ist eine beträchtliche Helligkeit erforderlich, um den Kraftfahrzeug-Innenraum zumindest so weit auszuleuchten, daß der Fahrer bei Dunkelheit eine grobe Orientierung über die Gegenstände des Innenraums erhält. Bei einer derartigen Helligkeit punktförmiger Leuchtkörper besteht die Gefahr, daß der Fahrer während der Fahrt abgelenkt wird, so daß es zu Unfällen kommen kann. Im Gegensatz dazu ist das hier bevorzugte Leuchtelement flächenhaft ausgedehnt, so daß seine Leuchtdichte, d.h. die Helligkeit pro Flächeneinheit, reduziert werden kann. Hierbei ist es besonders günstig, wenn das Leuchtelement sich im wesentlichen entlang des gesamten Auskleidungselements erstreckt, da dadurch eine besonders gleichmäßige Beleuchtung erzielbar ist.

Es kann beispielsweise vorgesehen sein, daß das Leuchtelement streifenförmig oder ornamentartig ausgebildet ist.

Hierbei ist es von besonderem Vorteil, wenn das Leuchtelement eine praktisch gleichmäßig helle Leuchtfläche ausbildet. So kann beispielsweise vorgesehen sein, daß die Helligkeit über die gesamte Leuchtfläche allenfalls Schwankungen von 10 % der Durchschnittshelligkeit aufweist, besonders bevorzugt kommen Leuchtelemente zum Einsatz, deren Helligkeitsschwankung über die Leuchtfläche weniger als 5 % beträgt.

Von Vorteil ist es, wenn die Helligkeit des Leuchtelements elektrisch veränderbar ist. So kann beispielsweise vorgesehen sein, daß die Helligkeit durch Änderung der Amplitude oder der Frequenz der Versorgungsspannung des elektrischen Leuchtelements einstellbar veränderbar ist.

Bei einer besonders bevorzugten Ausführungsform der Erfindung ist vorgesehen, daß das Leuchtelement folienartig ausgebildet ist. Ein derartiges Leuchtelement ist mechanisch flexibel und zeichnet sich durch eine besonders geringe Bautiefe aus. Dies ermöglicht es, das Leuchtelement auch in Innenausbauteile mit einem gekrümmten Auskleidungselement, beispielsweise einem konvex oder konkav geformten Auskleidungselement, zu integieren, ohne daß die gesamte Bautiefe des Innenausbauteils merklich erhöht wird.

So kann beispielsweise vorgesehen sein, daß das Leuchtelement als mehrschichtiges Elektrolumineszenzsystem ausgebildet ist mit zwei elektrisch leitfähigen Elektrodenschichten, zwischen denen eine dielektrische Elektrolumineszenzschicht angeordnet ist. Letztere umfaßt ein Dielektrikum mit eingelagerten Zinksulfid-Leuchtkristallen, die durch Anlegen einer elektrischen Wechselspannung an die beiden Elektrodenschichten zum Leuchten angeregt werden. Eine der beiden Elektrodenschichten kann lichtdurchlässig ausgestaltet sein, so daß die Strahlung der Zinksulfid-Leuchtkristalle durch diese Elektrodenschicht hindurch treten kann. Zusätzlich kann eine transparente Deckschicht vorgesehen sein sowie ein Kunststoff- oder Glasträger, der die beiden Elektrodenschichten sowie die Elektrolumineszenzschicht trägt.

Es kann vorgesehen sein, daß das Auskleidungselement einen Träger bildet für das Leuchtelement, so daß das Leuchtelement mechanisch stabilisiert wird. Hierzu kann das Auskleidungselement eine Aufnahme aufweisen, beispielsweise eine Nut, in die das Leuchtelement eingefügt werden kann.

Alternativ kann das Innenausbauteil auch ein zusätzliches Trägerteil umfassen, an dem das Leuchtelement gehalten ist. Hierbei ist es von besonderem Vorteil, wenn das zusätzliche Trägerteil sowohl das Leuchtelement als auch das Auskleidungselement trägt. Dadurch kann auch ein Auskleidungselement zum Einsatz kommen, das nicht selbständig formstabil ist, sondern seine mechanische Stabilität aufgrund seiner Halterung am Trägerteil erhält.

Vorzugsweise umfaßt das Auskleidungselement ein Holzformteil, ein Kunststoffformteil und/oder eine Metallfolie. Das Holzformteil kann als massives Teil ausgestaltet sein, besonders bevorzugt kommen allerdings Holzfurniere zum Einsatz, die beispielsweise streifenförmig oder in der Art eines Ornaments ausgestaltet sein können. Insbesondere Holzfurniere können hierbei in Kombination mit einem Kunststoffformteil und/oder einer Metallfolie dem Innenausbauteil eine optisch besonders ansprechende Wirkung und gleichzeitig eine hohe Stabilität sowie im Falle eines Aufpralls ein gutes Bruchverhalten verleihen. Als Metallfolie kann hierbei beispielsweise eine Aluminiumfolie vorgesehen sein.

Bevorzugt weist das Innenausbauteil auf seiner Sichtseite eine transparente Beschichtung auf, beispielsweise eine Lack- oder Harzschicht, wobei die Beschichtung das Auskleidungselement und das Leuchtelement überdeckt. Die transparente Beschichtung ermöglicht es, die Sichtseite des Innenausbauteils auch im Bereich des Leuchtelements kratzfest und hochglänzend auszugestalten.

Bei einer besonders bevorzugten Ausführungsform ist vorgesehen, daß das Innenausbauteil ein dem Leuchtelement zugeordnetes optisches Filterelement umfaßt zur Begrenzung des Ausleuchtbereichs des Leuchtelements. Als Ausleuchtbereich wird hierbei derjenige Winkelbereich bezeichnet, der vom Leuchtelement senkrecht zu seiner Leuchtfläche ausgeleuchtet wird. Durch eine Begrenzung des Ausleuchtbereichs kann besonders zuverlässig sichergestellt werden, daß der Fahrer des Kraftfahrzeugs bei der Beleuchtung des Kraftfahrzeug-Innenraums nicht vom Leuchtelement abgelenkt wird. Hierzu ist es lediglich erforderlich, das Leuchtelement innerhalb des Kraftfahrzeugs derart anzuordnen, daß der Ausleuchtbereich des Leuchtelements nicht den Kopfbereich des Fahrers erfaßt.

Von Vorteil ist es, wenn das Filterelement den Ausleuchtbereich des Leuchtelements auf einen Winkelbereich von maximal ungefähr ± 45° zur Oberflächennormalen der sichtseitigen Oberfläche des Innenausbauteils begrenzt. Besonders günstig ist es, wenn der Winkelbereich ca. ± 30° zur Oberflächennormalen beträgt. Durch einen derart beschränkten Ausleuchtbereich wird zuverlässig verhindert, daß der Fahrer während der Fahrt vom Leuchtelement abgelenkt oder gar geblendet wird.

Das Filterelement ist vorzugsweise als Filterfolie ausgestaltet und weist dadurch eine hohe mechanische Flexibilität auf sowie eine geringe Bautiefe. Das Filterelement kann somit auf einfache Weise die gesamte Leuchtfläche des Leuchtelements überdecken, auch wenn letzteres eine flächenhafte Ausdehnung aufweist, beispielsweise streifenförmig oder ornamentartig ausgestaltet ist.

Bei einer vorteilhaften Ausführungsform ist vorgesehen, daß das Filterelement als zumindest teiltransparente Kunststoff-Folie mit eingelagerten, jalousieartig angeordneten, praktisch lichtundurchlässigen Mikrolamellen ausgestaltet ist. Als Kunststoffmaterial kann hierfür beispielsweise ein Polycarbonat zum Einsatz kommen. Die Mikrolamellen können im wesentlichen senkrecht zur sichtseitigen Oberfläche des Innenausbauteils ausgerichtet sein. Dadurch wird der Austrittswinkel der Lichtstrahlung des Leuchtelements auf einen Winkelbereich beschränkt, der durch den Abstand und die Höhe der Mikrolamellen vorgegeben ist. Je geringer der Abstand und je höher die Mikrolamellen, desto geringer ist der mögliche Austrittsbereich der Lichtstrahlen, d.h. desto stärker wird der Ausleuchtbereich des Leuchtelements begrenzt.

Statt einer Anordnung der Mikrolamellen im wesentlichen senkrecht zur sichtseitigen Oberfläche des Innenausbauteils kann auch vorgesehen sein, daß die Mikrolamellen schräg zur Oberflächennormale der sichtseitigen Oberfläche des Innenausbauteils ausgerichtet sind. Dadurch kann erzielt werden, daß die Strahlung des Leuchtelements beispielsweise auf den Bodenbereich des Kraftfahrzeug-Innenraums gerichtet wird, ohne daß es erforderlich ist, das gesamte Innenausbauteil entsprechend schräg auszurichten.

Die nachfolgende Beschreibung einer bevorzugten Ausführungsform der Erfindung dient im Zusammenhang mit der Zeichnung der näheren Erläuterung. Es zeigen:

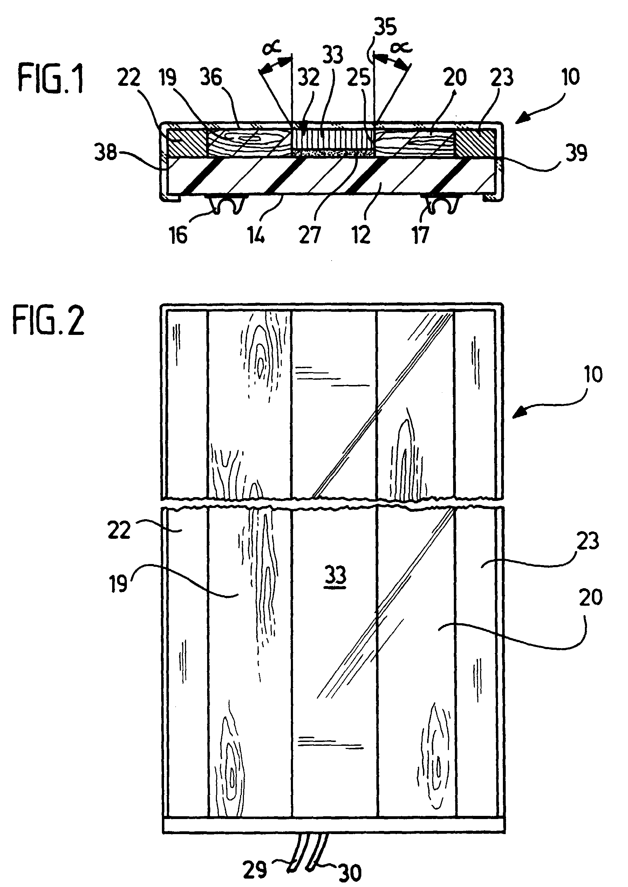

- Figur 1:: Eine Schnittdarstellung eines Innenausbauteils für ein Kraftfahrzeug und
- Figur 2:: eine Draufsicht auf das in Figur 1 dargestellte Innenausbauteil.

In der Zeichnung ist ein insgesamt mit dem Bezugszeichen 10 belegtes Innenausbauteil dargestellt zur Innenausstattung eines Kraftfahrzeugs. Das Innenausbauteil umfaßt ein Trägerteil 12 aus Kunststoff, an dessen Rückseite 14 an sich bekannte und deshalb in der Zeichnung nur schematisch dargestellte Befestigungselemente 16, 17 gehalten sind. Auf seiner gegenüberliegenden Seite trägt das Trägerteil 12 zwei parallel und im Abstand zueinander angeordnete Holzfurnierstreifen 19, 20 sowie zwei an den einander abgewandten Außenseiten der Holzfurnierstreifen 19, 20 angeordnete Aluminiumstreifen 22, 23. Die Holzfurnierstreifen 19, 20 und die Aluminiumstreifen 22, 23 bilden zusammen ein selbständig nicht formstabiles Auskleidungselement, das durch das Trägerteil 12 mechanisch stabilisiert wird. Die Holzfurnierstreifen 19, 20 und die Aluminiumstreifen 22, 23 sind zu diesem Zweck mit dem Trägerteil 12 verklebt.

Die beiden im Abstand zueinander angeordneten Holzfurnierstreifen 19, 20 definieren zwischen sich eine Aufnahme 25, in die ein Leuchtelement eingefügt ist. Dieses wird von einer streifenförmig ausgebildeten Leuchtfolie 27 gebildet, die ein Elektrolumineszenzsystem darstellt, dessen Aufbau aus der Zeichnung nicht ersichtlich ist. Das Elektrolumineszenzsystem wird von zwei leitfähigen Elektrodenschichten gebildet, die zwischen sich eine dielektrische Elektrolumineszenzschicht aufnehmen, in welche Zinksulfid-Leuchtkristalle eingelagert sind. Die beiden leitfähigen Elektrodenschichten können über elektrische Anschlußleitungen 29, 30 an eine in der Zeichnung nicht dargestellte elektrische Spannungsquelle angeschlossen werden. Werden die Elektrodenschichten mit einer elektrischen Wechselspannung beaufschlagt, so werden dadurch die in die Elektrolumineszenzschicht eingelagerten Zinksulfid-Leuchtkristalle zum Leuchten angeregt. Die beiden Elektrolumineszenzschichten sind parallel zur Oberseite des Trägerteils 12 angeordnet, und damit die Lichtstrahlung das Elektrolumineszenzsystem verlassen kann, ist die obere, d.h. der Rückseite 14 des Trägerteils 12 abgewandte Elektrodenschicht transparent ausgestaltet.

Die Leuchtfolie 27 trägt auf ihrer der Rückseite 14 des Trägerteils 12 abgewandten Oberseite eine Filterfolie 32. Hierbei handelt es sich um eine transparente Kunststoff-Folie, in die jalousieartig angeordnete, lichtundurchlässige Mikrolamellen 33 eingelagert sind. Diese sind im wesentlichen senkrecht zur Oberfläche der Leuchtfolie 27 ausgerichtet. Dies hat zur Folge, daß nur derartige, von der Leuchtfolie 27 emittierte Lichtstrahlung durch die Filterfolie 32 hindurch treten kann, die maximal in einem Winkel α von ± 30° zur Oberflächennormalen 35 der sichtseitigen Oberfläche 36 des Innenausbauteils 10 ausgerichtet ist. Lichtstrahlung, die unter einem größeren Winkel auf die Mikrolamellen 33 trifft, wird von diesen am Hindurchtreten der Filterfolie 32 gehindert.

Sowohl die sichtseitige Oberfläche 39 des Innenausbauteils 10 als auch dessen Kantenbereiche 38, 39 sind mit einer transparenten Lackschicht 40 versehen, die somit sowohl die Aluminiumstreifen 22, 23 und die Holzfurnierstreifen 19, 20 als auch die Filterfolie 32 überdeckt.

Mittels der Befestigungselemente 16 und 17, die beispielsweise als Befestigungsclipse ausgestaltet sein können, kann das Innenausbauteil 10 auf einfache Weise innerhalb eines Kraftfahrzeug-Innenraums befestigt werden. Zum Anschluß der Leuchtfolie 27 ist es lediglich erforderlich, diese über die elektrischen Anschlußleitungen 29 und 30 mit einer elektrischen Spannungsquelle zu verbinden. Die Helligkeit der Leuchtfolie ist von der Amplitude und der Frequenz der elektrischen Versorgungsspannung abhängig, so daß durch geeignete Einstellung beispielsweise der Frequenz die Helligkeit so justiert werden kann, daß die Leuchtfolie 27 in einem Kraftfahrzeug-Innenraum einem Fahrer während der Fahrt bei Dunkelheit zu einer Orientierung innerhalb des Kraftfahrzeug-Innenraums verhilft, daß aber eine Ablenkung des Fahrers vermieden wird. Hierbei wird durch den Einsatz der Filterfolie sichergestellt, daß die Lichtstrahlung nur in einem beschränkten Winkelbereich relativ zur Oberflächennormale 35 austreten kann, wodurch die Gefahr einer Ablenkung des Fahrers durch die Leuchtfolie zusätzlich verringert wird.

## Patentansprüche

1. Innenausbauteil für Kraftfahrzeuge mit einem Auskleidungselement, zum Beispiel aus Holz, zur Auskleidung eines Kraftfahrzeug-Innenraums, dadurch gekennzeichnet, daß in das Innenausbauteil (10) zur Beleuchtung des Kraftfahrzeug-Innenraums ein elektrisches Leuchtelement (27) integriert ist.

2. Innenausbauteil nach Anspruch 1, dadurch gekennzeichnet, daß die Bautiefe des Leuchtelements (27) maximal ca. der Bautiefe des Auskleidungselements (19, 20, 22, 23) entspricht.

3. Innenausbauteil nach Anspruch 1 oder 2, dadurch gekennzeichnet, daß das Leuchtelement (27) flächenhaft ausgedehnt ist.

4. Innenausbauteil nach Anspruch 3, dadurch gekennzeichnet, daß das Leuchtelement (27) sich im wesentlichen entlang des gesamten Auskleidungselements (19, 20, 22, 23) erstreckt.

5. Innenausbauteil nach einem der voranstehenden Ansprüche, dadurch gekennzeichnet, daß das Leuchtelement (27) streifenförmig ausgebildet ist.

6. Innenausbauteil nach einem der voranstehenden Ansprüche, dadurch gekennzeichnet, daß das Leuchtelement ornamentartig ausgebildet ist.

7. Innenausbauteil nach einem der voranstehenden Ansprüche, dadurch gekennzeichnet, daß das Leuchtelement (27) eine praktisch gleichmäßig leuchtende Leuchtfläche ausbildet.

8. Innenausbauteil nach einem der voranstehenden Ansprüche, dadurch gekennzeichnet, daß die Helligkeit des Leuchtelements (27) elektrisch veränderbar ist.

9. Innenausbauteil nach einem der voranstehenden Ansprüche, dadurch gekennzeichnet, daß das Leuchtelement (27) folienartig ausgebildet ist.

10. Innenausbauteil nach einem der voranstehenden Ansprüche, dadurch gekennzeichnet, daß das Leuchtelement (27) als mehrschichtiges Elektrolumineszenzsystem ausgestaltet ist mit zwei elektrisch leitfähigen Elektrodenschichten, zwischen denen eine dielektrische Elektrolumineszenzschicht angeordnet ist.

11. Innenausbauteil nach einem der voranstehenden Ansprüche, dadurch gekennzeichnet, daß das Auskleidungselement einen Träger bildet für das Leuchtelement.

12. Innenausbauteil nach einem der Ansprüche 1 bis 10, dadurch gekennzeichnet, daß das Innenausbauteil (10) ein Trägerteil (12) umfaßt, an dem das Leuchtelement (27) gehalten ist.

13. Innenausbauteil nach Anspruch 12, dadurch gekennzeichnet, daß das Auskleidungselement (19, 20, 22, 23) am Trägerteil (12) gehalten ist.

14. Innenausbauteil nach einem der voranstehenden Ansprüche, dadurch gekennzeichnet, daß das Auskleidungselement ein Holzformteil (19, 20), ein Kunststoffformteil und/oder eine Metallfolie (22, 23) umfaßt.

15. Innenausbauteil nach einem der voranstehenden Ansprüche, dadurch gekennzeichnet, daß das Innenausbauteil (10) auf seiner Sichtseite eine transparente Beschichtung (40) aufweist, die das Auskleidungselement (19, 20, 22, 23) und das Leuchtelement (27) überdeckt.

16. Innenausbauteil nach einem der voranstehenden Ansprüche, dadurch gekennzeichnet, daß das Innenausbauteil (10) ein dem Leuchtelement (27) zugeordnetes optisches Filterelement (32) umfaßt zur Begrenzung des Ausleuchtbereichs des Leuchtelements (27).

17. Innenausbauteil nach Anspruch 16, dadurch gekennzeichnet, daß das Filterelement (32) den Ausleuchtbereich des Leuchtelements (27) auf einen Winkelbereich (α) von maximal ungefähr ± 45° zur Oberflächennormalen (35) der sichtseitigen Oberfläche des Innenausbauteils (10) begrenzt.

18. Innenausbauteil nach Anspruch 17, dadurch gekennzeichnet, daß der Winkelbereich (α) ca. ± 30° zur Oberflächennormalen (35) beträgt.

19. Innenausbauteil nach Anspruch 16, 17 oder 18, dadurch gekennzeichnet, daß das Filterelement als Filterfolie (32) ausgestaltet ist.

20. Innenausbauteil nach Anspruch 19, dadurch gekennzeichnet, daß das Filterelement als zumindest teiltransparente Kunststoff-Folie (32) mit eingelagerten, jalousieartig angeordneten, praktisch lichtundurchlässigen Mikrolamellen (33) ausgestaltet ist.

21. Innenausbauteil nach Anspruch 20, dadurch gekennzeichnet, daß die Mikrolamellen (33) im wesentlichen senkrecht zur sichtseitigen Oberfläche des Innenausbauteils (10) ausgerichtet sind.
